# EUROPEAN PATENT APPLICATION

(11) **EP 3 413 519 A1**
(43) Date of publication of application: **12.12.2018**
(21) Application number: 17763279.1
(22) Date of filing: 07.03.2017
(51) Int. Cl.: H04L 12/715

(54) **NETWORK SYSTEM, COMMUNICATION DEVICE, AND COMMUNICATION METHOD**

(30) Priority: 09.03.2016 JP 2016046354
(71) Applicant: Furukawa Electric Co., Ltd., Chiyoda-ku Tokyo 100-8322 (JP)
(72) Inventor: RIKISO, Masahiro, Tokyo 100-8322 (JP); MIURA, Masayuki, Tokyo 100-8322 (JP)
(74) Representative: Horn Kleimann Waitzhofer Patentanwälte PartG mbB
(86) International application number: PCT/JP2017/009108
(87) International publication number: WO 2017/154939

(57) **Abstract**

[OBJECT] To reduce a buffer capacity that a memory is required to have and prevent the occurrence of useless communication.

[ORGANIZATION] A network system which includes at least a communication device 10 as a transmission source, a communication device 60 as a transmission destination, and an intermediate communication device 20 disposed between the transmission-source communication device and the transmission-destination communication device, the intermediate communication device having a function of connecting sub-networks which construct communication routes based on route construction protocols independent of each other, the network system characterized in that the intermediate communication device 20 includes: a route establishing means (control part 22) that establishes a route to the transmission-destination communication device 60 when a packet addressed to the transmission-destination communication device 60 is received from the transmission-source communication device 10; and a proxy reply means (control part 22) that replies as a proxy for the transmission-destination communication device 60 to the transmission-source communication device 10 when the route is established by the route establishing means.

## Description

### Technical Field

The present invention relates to a network system, a communication device, and a communication method.

### Background Art

Patent Document 1 discloses an art including: a first step of searching for a communication route from a transmission-source node up to a transmission-destination node via intermediate nodes by using an AODV (Ad hoc On-Demand Distance Vector) protocol and reserving a communication band on the route; a second step of storing, in the intermediate nodes, information on a communication bandwidth on a link route connecting the adjacent intermediate nodes on the communication route; and a third step of, at the time of a route reply from the transmission-destination node on the route to the transmission-source node, collecting the information on an available communication bandwidth on the route to convey the information to the transmission-source node.

### Prior Art Document

### Patent Document

Patent Document 1: Re-publication of PCT International Publication No. 03/061220

### Disclosure of the Invention

### Problems to be Solved by the Invention

Incidentally, L3SW (Layer 3 Switch) or a router device (hereinafter, an intermediate communication device) connecting to a node not capable of route search using the on-demand protocol as is disclosed in Patent Document 1 or to a network whose route search method is different replies as a proxy to a route search to a destination other than an own IP address or to an ARP (Address Resolution Protocol) Request and as a result receives a communication packet, and executes the route search to a different network to establish a route, thereby relaying the communication. However, if, at an instant when the node which executes such a proxy reply receives the communication packet, a route in a network to which the transmission-destination node belongs has not been established, it may take time to establish the route to the transmission-destination node. This involves a problem that the node which executes the proxy reply requires a memory having a capacity large enough to prevent a buffer overflow of the communication packet.

In addition, if the communication from the intermediate communication device to the transmission-destination communication device is impossible, a communication packet for which a route to the transmission-destination cannot be found is transmitted to the intermediate communication device, and this communication packet becomes wasteful.

Under such circumstances, it is an object of the present invention to provide a network system, a communication device, and a communication method which make it possible to reduce a buffer capacity that a memory needs to have and prevent the occurrence of useless communication.

### Means for Solving the Problems

In order to solve the aforesaid problems, the present invention is a network system which includes at least a communication device as a transmission source, a communication device as a transmission destination, and an intermediate communication device disposed between the transmission-source communication device and the transmission-destination communication device, the intermediate communication device having a function of connecting sub-networks which construct communication routes based on route construction protocols independent of each other, the network system characterized in that the intermediate communication device includes: a route establishing means that establishes a route to the transmission-destination communication device when a packet addressed to the transmission-destination communication device is received from the transmission-source communication device; and a proxy reply means that replies as a proxy for the transmission-destination communication device to the transmission-source communication device when the route is established by the route establishing means.

Such a configuration makes it possible to reduce a buffer capacity that a memory needs to have and prevent the occurrence of useless communication.

Further, the present invention is characterized in that: at least part between the intermediate communication device and the transmission-destination communication device has a route construction function based on an on-demand protocol and the transmission-source communication device has a route construction function based on a protocol independent of the protocol used by the intermediate communication device; the route establishing means of the intermediate communication device establishes the route to the transmission-destination communication device based on the on-demand protocol when the intermediate communication device receives the packet addressed to the transmission-destination communication device from the transmission-source communication device; and the proxy reply means replies as a proxy for the transmission-destination communication device to the transmission-source communication device when the route is established by the route establishing means.

Such a configuration makes it possible to reduce a buffer capacity that the intermediate communication device needs to have and prevent the occurrence of useless communication.

Further, the present invention is characterized in that: at least part between the transmission-source and intermediate communication devices has a route construction function based on an on-demand protocol and the transmission-destination communication device has a route construction function based on a protocol independent of the protocol used by the intermediate communication device; the route establishing means of the intermediate communication device establishes the route to the transmission-destination communication device when the packet addressed to the transmission-destination communication device is received from the transmission-source communication device; and the proxy reply means replies as a proxy for the transmission-destination communication device to the transmission-source communication device based on the on-demand protocol when the route is established by the route establishing means.

Such a configuration makes it possible to reduce a buffer capacity that the intermediate communication device needs to have and prevent the occurrence of useless communication.

Further, the present invention is characterized in that the on-demand protocol is AODV.

Such a configuration makes it possible to reduce a buffer capacity that a memory is required to have and prevent the occurrence of useless communication, in a network using AODV as the on-demand protocol.

Further, the present invention is characterized in that: the transmission-source and transmission-destination communication devices belong to different sub-networks and the intermediate communication device is a communication device located at a node connecting the different sub-networks; the route establishing means of the intermediate communication device establishes the route to the transmission-destination communication device when the intermediate communication device receives the packet addressed to the transmission-destination communication device from the transmission-source communication device; and the proxy reply means replies as a proxy for the transmission-destination communication device to the transmission-source communication device when the route is established by the route establishing means.

Such a configuration makes it possible to reduce a buffer capacity that the intermediate communication device needs to have and prevent the occurrence of useless communication.

Further, the present invention is characterized in that the route establishing means does not execute the operation of establishing the route to the transmission destination when a route table for the transmission destination is present.

With such a configuration, the route establishing operation is not executed when the route table is already present, which makes it possible to quickly start the communication by skipping the processing.

Further, the present invention is a communication device used in a network system which includes at least a communication device as a transmission source, a communication device as a transmission destination, and an intermediate communication device, the intermediate communication device having a function of connecting sub-networks which construct communication routes based on route construction protocols independent of each other, the communication device characterized in that the intermediate communication device includes: a route establishing means that establishes a route to the transmission-destination communication device when a packet addressed to the transmission-destination communication device is received from the transmission-source communication device; and a proxy reply means that replies as a proxy for the transmission-destination communication device to the transmission-source communication device when the route is established by the route establishing means.

Such a configuration makes it possible to reduce a required buffer capacity and prevent the occurrence of useless communication.

Further, the present invention is a communication method of a network system which includes at least a communication device as a transmission source, a communication device as a transmission destination, and an intermediate communication device, the intermediate communication device having a function of connecting sub-networks which construct communication routes based on route construction protocols independent of each other, the method characterized by including: a route establishing step of establishing a route to the transmission-destination communication device when the intermediate communication device receives a packet addressed to the transmission-destination communication device from the transmission-source communication device; and a proxy reply step of causing the intermediate communication device to reply as a proxy for the transmission-destination communication device to the transmission-source communication device when the route is established in the route establishing step.

Such a method makes it possible to reduce a required buffer capacity and prevent the occurrence of useless communication.

### Effect of the Invention

According to the present invention, it is possible to provide a network system, a communication device, and a communication method which make it possible to reduce a buffer capacity that a memory needs to have and prevent the occurrence of useless communication.

### Brief Description of Drawings

Fig. 1 is a diagram illustrating a configuration example of a network system according to a first embodiment of the present invention.
Fig. 2 is a diagram illustrating a detailed configuration example of a communication device illustrated in Fig. 1.
Fig. 3 is an explanatory diagram illustrating the operation of the first embodiment illustrated in Fig. 1.
Fig. 4 is an explanatory diagram of the operation of a conventional example.
Fig. 5 is an explanatory flowchart of the operation of the first embodiment illustrated in Fig. 1.
Fig. 6 is an explanatory flowchart of the operation of the first embodiment illustrated in Fig. 1.
Fig. 7 is a diagram illustrating a configuration example of a network system according to a second embodiment of the present invention.
Fig. 8 an explanatory diagram of the operation of the second embodiment illustrated in Fig. 7.
Fig. 9 is an explanatory flowchart of the operation of the second embodiment illustrated in Fig. 7.
Fig. 10 is an explanatory flowchart of the operation of the second embodiment illustrated in Fig. 7.
Fig. 11 is a diagram illustrating a configuration example of a network system according to a third embodiment of the present invention.
Fig. 12 an explanatory diagram of the operation of the third embodiment illustrated in Fig. 11.
Fig. 13 is an explanatory flowchart of the operation of the third embodiment illustrated in Fig. 11.

### Modes for Carrying out the Invention

Next, embodiments of the present invention will be described.

### (A) Explanation of Configuration of First Embodiment of Present Invention

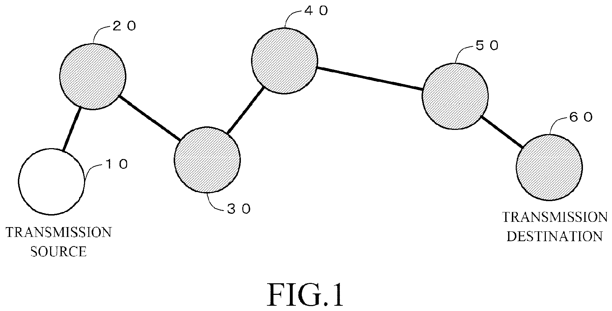

Fig. 1 is a diagram illustrating a configuration example of a network system according to a first embodiment of the present invention. As illustrated in Fig. 1, the network system according to the first embodiment of the present invention includes communication devices 10 to 60 functioning as nodes of a network.

In the example in Fig. 1, the unhatched communication device 10 does not have AODV route construction capability and the hatched communication devices 20 to 60 have the AODV route construction capability. That is, the communication device 10 and the communication devices 30 to 60 belong to independent sub-networks respectively, and the communication device 20 has a function of connecting these two independent sub-networks. Further, the communication devices 20 to 60 perform route construction based on an on-demand protocol.

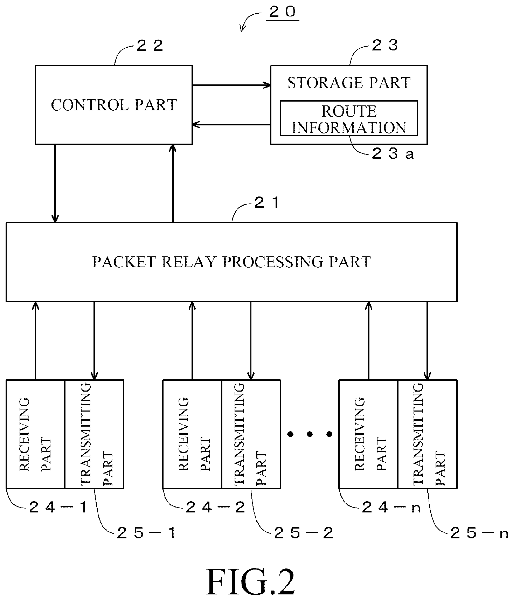

Fig. 2 is a diagram illustrating a configuration example of the communication device 20 illustrated in Fig. 1. Since the communication devices 10 to 60 have the same configuration, the following describes the communication device 20 as an example.

As illustrated in Fig. 2, the communication device 20 includes a packet relay processing part 21, a control part 22, a storage part 23, receiving parts 24-1 to 24-n, and transmitting parts 25-1 to 25-n.

Here, in response to the control by the control part 22, the packet relay processing part 21 sends out packets received by the receiving parts 24-1 to 24-n, from the corresponding transmitting parts 25-1 to 25-n according to information stored in headers of the packets. The control part 22 rewrites the headers of the received packets according to route information 23a stored in the storage part 23 to transmit the packets via the packet relay processing part 21.

The storage part 23 is constituted by a semiconductor memory, and it not only has the route information 23a which is information used for transferring the packets but also stores programs and data used for executing later-described processing involved in packet transfer. The receiving parts 24-1 to 24-n each receive a packet from another communication device. Further, the transmitting parts 25-1 to 25-n each transmit a packet to another communication device.

### (B) Explanation of Operation of First Embodiment of Present Invention

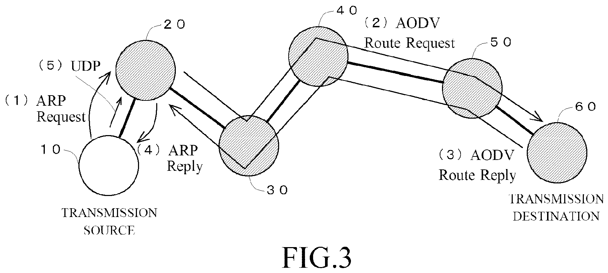

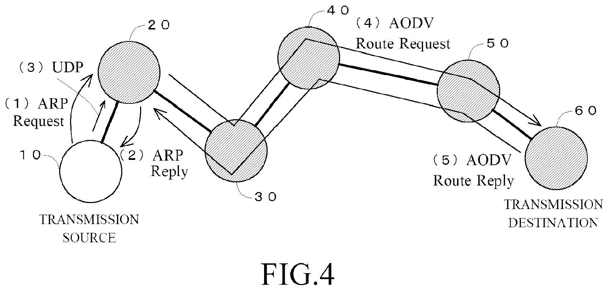

Next, the operation of the first embodiment of the present invention will be described. Fig. 3 is an explanatory diagram illustrating the operation of the first embodiment illustrated in Fig. 1. The following first describes the operation of a conventional example with reference to Fig. 4 and then describes the operation of the first embodiment with reference to Fig. 3.

Fig. 4 is an explanatory diagram of the operation of the conventional example. When the communication device 10 not having the route construction function based on the AODV protocol tries to construct a route to the communication device 60, the communication device 10 transmits an ARP Request packet including an IP address of the transmission-destination communication device 60 to the communication device 20 (1). The communication device 20 receiving such an ARP Request packet replies as a proxy by transmitting an ARP Reply packet including an own MAC (Media Access Control) address to the communication device 10 (2). The communication device 10 receiving the ARP Reply packet starts the transmission of data to the communication device 20 based on UDP (User Datagram Protocol) (3). Meanwhile, the communication device 20 executes route construction to the IP address included in the ARP Request packet received from the communication device 10, by Proxy ARP. In more detail, the communication device 20 transmits an AODV Route request packet to the communication device 60 (4). The communication device 60 receiving the AODV Route Request packet transmits an AODV Route Reply packet to the communication device 20 (5). The communication device 20 receiving the AODV Route Reply packet transmits the data packet received from the communication device 10, to the communication device 60 through a route established by the above operation.

Incidentally, in the conventional example illustrated in Fig. 4, immediately after the communication device 10 receives the ARP Reply packet from the communication device 20, the communication device 10 starts the transmission of the data packet to the communication device 20 based on UDP. Since it takes some time for the communication device 20 to transmit the AODV Route Request packet to the communication device 60 to establish the route, the data packet that the communication device 20 receives from the communication device 10 during this period has to be stored in, for example, a buffer provided in the storage part 23. Since such a buffer needs to be set with a capacity to spare based on the maximum time required to establish the route and the maximum communication speed, it is necessary to prepare a buffer having a considerably large capacity.

In the first embodiment, on the other hand, as illustrated in Fig. 3, when receiving an ARP Request packet from the communication device 10 (1), the communication device 20 does not transmit an ARP Reply packet immediately but first executes route establishment between itself and the transmission-destination communication device 60. Specifically, the communication device 20 transmits an AODV Route Request packet to the communication device 60 (2). The communication device 60 receiving such an AODV Route Request packet transmits an AODV Route Reply packet to the communication device 20 (3).

The communication device 20 receiving the AODV Route Reply packet establishes a route between itself and the communication device 60. When succeeding in the establishment of the route in this way, the communication device 20 replies as a proxy for the communication device 60 by transmitting the ARP Reply packet to the communication device 10 (4). When receiving the ARP Reply packet from the communication device 20, the communication device 10 starts the transmission of a data packet based on UDP (5).

As described above, in the first embodiment, when receiving the ARP Request packet from the transmission-source communication device 10, the communication device 20 establishes the route between itself and the transmission-destination communication device 60 and thereafter replies as a proxy by transmitting the ARP Reply packet to the communication device 10. This can prevent the data packet from being transmitted from the communication device 10 before the route to the communication device 60 is established as is done in the conventional example illustrated in Fig. 4, enabling a reduction in the buffer capacity reserved in the storage part 23, for instance.

Further, since a special configuration intended to reduce the buffer capacity of the communication device 20, for example, slowing down the communication speed during a predetermined period after the communication device 10 starts the communication is not necessary, a general-purpose product having an ordinary configuration can be used as the communication device 10.

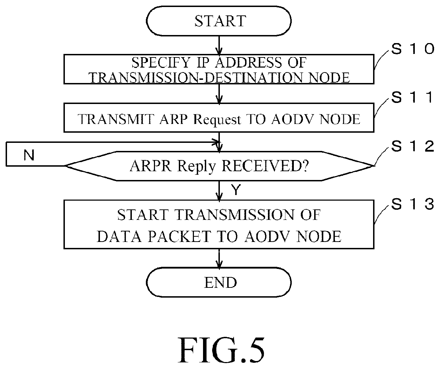

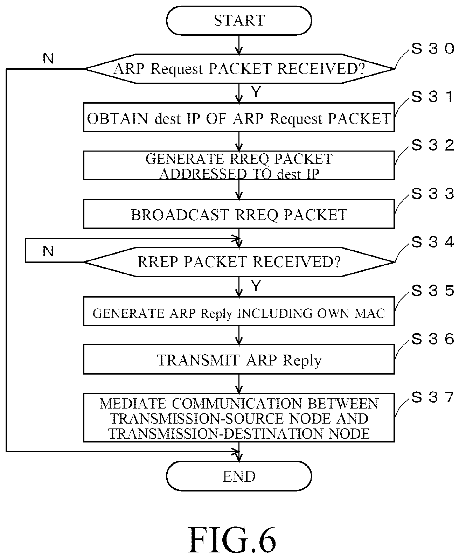

Next, processing executed in the first embodiment illustrated in Fig. 1 will be described with reference to Fig. 5 and Fig. 6. Fig. 5 is an explanatory flowchart of an example of processing executed in the communication device 10 illustrated in Fig. 1. When the flowchart illustrated in Fig. 5 is started, the following steps are executed.

At Step S10, the control part 12, not illustrated, of the communication device 10 specifies an IP address of a transmission-destination node. For example, the control part 12 specifies an IP address of the communication device 60 which is the transmission-destination node.

At Step S11, the control part 12, not illustrated, of the communication device 10 transmits an ARP Request packet to an AODV node (node having a route construction function based on the AODV protocol). For example, the communication device 10 transmits, to the communication device 20, an ARP Request packet whose MAC address search target is the IP address of the communication device 60 which is the transmission-destination node. Alternatively, the communication device 10 transmits, to the communication device 20, an ARP Request packet whose destination IP address (dest IP) is the IP address of the communication device 60.

At Step S12, the control part 12, not illustrated, of the communication device 10 determines whether or not an ARP Reply packet has been received from an AODV node, and when determining that the ARP Reply packet has been received (Step S12: Y), goes to Step S13, and otherwise (Step S12: N), repeats the same processing. For example, in a case where the ARP Reply packet has been received from the communication device 20 which is the ADOV node, the control part 12 determines as Y to go to Step S13.

At Step S13, the control part 12, not illustrated, of the communication device 10 starts the transmission of a data packet to the AODV node. For example, it transmits the data packet based on UDP to the communication device 20 which is the AODV node.

Next, Fig. 6 is an explanatory flowchart of an example of processing executed in the communication device 20 illustrated in Fig. 1. When the flowchart illustrated in Fig. 6 is started, the following steps are executed.

At Step S30, the control part 22 of the communication device 20 determines whether or not an ARP Request packet has been received, and when determining that it has been received (Step S30: Y), goes to Step S30, and otherwise (Step S30: N), ends the processing. For example, in a case where the ARP Request packet has been received from the communication device 10, the control part 22 determines as Y to go to Step S30.

At Step S31, the control part 22 of the communication device 20 obtains a destination IP address (dest IP) from the ARP Request packet. For example, in a case of the ARP Request packet whose destination is the communication device 60, the IP address of the communication device 60 is obtained as the destination IP address.

At Step S32, the control part 22 of the communication device 20 generates an RREQ (Route Request) packet addressed to the destination IP address obtained at Step S31. For example, in a case where the transmission destination is the communication device 60, an AODV Route Request packet addressed to the communication device 60 is generated.

At Step S33, the control part 22 of the communication device 20 broadcasts the RREQ packet generated at Step S32 to other communication devices. For example, in the example in Fig. 1, the AODV Route Request packet is transferred to the communication device 60 via the communication devices 30, 40, 50. The communication device 60 receives the AODV Route Request packet, and when recognizing that this packet is addressed to itself by referring to the IP address, transmits an AODV RREP (Route Reply) packet to the communication device 20 via the communication devices 50, 40, 30.

At Step S34, the control part 22 of the communication device 20 determines whether or not an RREP packet has been received, and when determining that it has been received (Step S34: Y), goes to Step S35, and otherwise (Step S34: N), repeats the same processing. For example, when determining that the AODV Route Reply packet has been received from the communication device 60, the control part 22 determines as Y to go to Step S35.

At Step S35, the control part 22 of the communication device 20 generates an ARP Reply packet including an own MAC address. For example, in a case where the transmission destination is the communication device 60, the control part 22 generates the ARP Reply packet including the IP address of the communication device 60 obtained at Step S31 and the own MAC address.

At Step S36, the control part 22 of the communication device 20 replies as a proxy by transmitting the ARP Reply packet generated at Step S35. For example, in a case where the communication device 10 is the transmission source, the control part 22 replies as a proxy for the communication device 60 by transmitting the ARP Reply packet to the communication device 10. Consequently, the transmission-source communication device 10 determines as Y at Step S12 and goes to Step S12 to start the transmission of the data packet.

At Step S37, the control part 22 of the communication device 20 mediates the communication between a transmission-source node and a transmission-destination node. For example, in a case where the transmission-source node is the communication device 10 and the transmission-destination node is the communication device 60, the communication device 20 executes the communication mediation between them. Consequently, the data packet is transmitted from the communication device 10 toward the communication device 60.

As described above, according to the flowcharts illustrated in Fig. 5 and Fig. 6, the operation previously described with reference to Fig. 3 is achieved.

### (C) Explanation of Configuration of Second Embodiment of Present Invention.

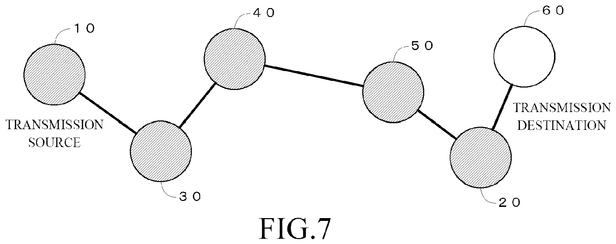

Fig. 7 is a diagram illustrating a configuration example of a network system according to a second embodiment of the present invention. As illustrated in Fig. 7, the network system according to the second embodiment of the present invention includes communication devices 10 to 60 functioning as nodes of a network. Note that the communication device 20 has the same configuration as that in Fig. 2, and the communication devices 10, 30 to 60 have the same configuration as that of the communication device 20.

In the example in Fig. 7, the unhatched communication device 60 does not have AODV route construction capability and the hatched communication devices 10 to 50 have the AODV route construction capability. That is, the communication devices 10, 30, 40, 50 and the communication device 60 belong to independent sub-networks respectively, and the communication device 20 has a function of connecting the two independent sub-networks. Further, the communication devices 10 to 50 each construct a route based on an on-demand protocol.

### (D) Explanation of Operation of Second Embodiment of Present Invention

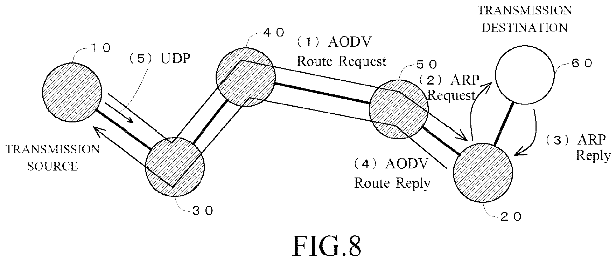

Next, the operation of the second embodiment illustrated in Fig. 7 will be described with reference to Fig. 8. The following describes, as an example, a case where the communication device 10 operates as a transmission-source node, the communication device 60 as a transmission-destination node, and the communication device 20 as an intermediate node which replies as a proxy. Further, the following briefly describes the operation of a conventional example and then describes the operation of the second embodiment.

In the conventional example, in a case where a data packet is transmitted from the transmission-source communication device 10 to the transmission-destination communication device 60, the communication device 10 broadcasts an AODV Route Request packet addressed to an IP address of the communication device 60. When receiving such an AODV Route Request packet, the communication device 20 executes a proxy reply since the IP address is not its own address but is that of its subordinate communication device 60. Specifically, the communication device 20 transmits an AODV Route Reply packet to the transmission-source communication device 10. As a result, the communication device 10 receiving the AODV Route Reply packet starts the transmission of the data packet toward the communication device 60. Meanwhile, the communication device 20 transmits an ARP Request packet to the communication device 60, and as a result, receives an ARP Reply packet from the communication device 60. The communication device 20 receiving the ARP Reply packet transmits, to the communication device 60, the data packet which is stored in a buffer after received from the communication device 10. Therefore, in the conventional example, since the data packet is transmitted from the communication device 10 before a route is established between the communication device 20 and the communication device 60, the communication device 20 has to assume the worst case when preparing the capacity of the buffer.

Next, the operation of the second embodiment will be described with reference to Fig. 8. In the second embodiment, when the transmission-source communication device 10 broadcasts an AODV Route Request packet to the transmission-destination communication device 60, this packet transmitted through the route illustrated in Fig. 8 is received by the communication device 20 (1). Since the IP address is not its own address but is the address of the subordinate communication device 60, the communication device 20 first determines whether or not the communication device 60 has been registered in an ARP table, and in a case where it has not been registered, transmits an ARP Request packet to the communication device 60 (2). Then, when receiving an ARP Reply packet from the communication device 60 (3), the communication device 20 registers the communication device 60 in the ARP table and thereafter transmits an AODV Route Reply packet to the transmission-source communication device 10 (4). On the other hand, in a case where the communication device 60 has been registered in the ARP table, the communication device 20 determines that a route has already been established and transmits the AODV Route Reply packet to the transmission-source communication device 10 without transmitting the ARP Request packet.

When the communication device 10 receives the AODV Route Reply packet, a route is established between the communication device 10 and the communication device 20, and accordingly the communication device 10 starts the transmission of a data packet to the communication device 20 (5).

According to the above-described operation, the communication device 20 as the intermediate node which replies as a proxy transmits the AODV Route Reply packet after establishing the route between itself and the communication device 60, which can prevent the data packet from being transmitted before the route to the communication device 60 is established. This can reduce a buffer capacity that the communication device 20 needs to have.

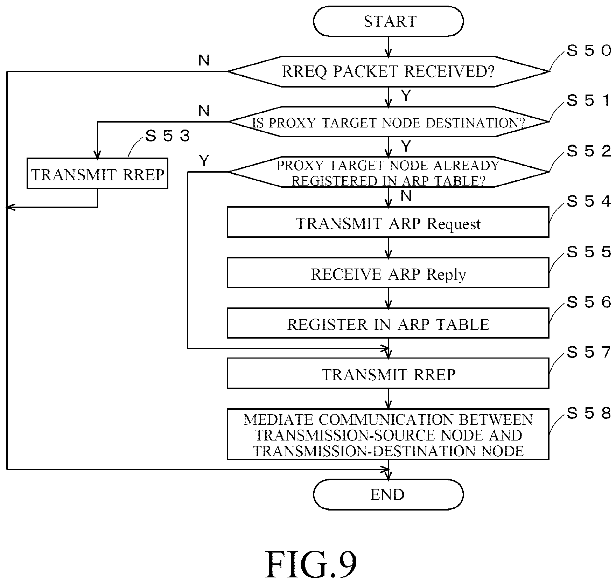

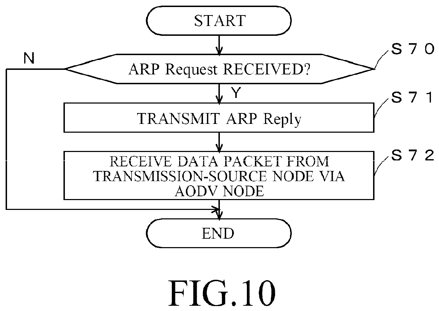

Next, processing executed in the second embodiment will be described with reference to Fig. 9 and Fig. 10.

Fig. 9 is a flowchart illustrating an example of processing executed in the communication device 20 as the intermediate node illustrated in Fig. 7. When the processing of this flowchart is started, the following steps are executed.

At Step S50, the control part 22 of the communication device 20 determines whether or not an AODV RREQ (Route Request) packet has been received, and when determining that it has been received (Step S50: Y), goes to Step S51, and otherwise (Step S50: N), ends the processing. For example, in a case where the AODV Route Request packet has been received from the communication device 10, the control part 22 goes to Step S51.

At Step S51, the control part 22 of the communication device 20 determines whether or not a destination of the RREQ packet received at Step S50 is a node for which a proxy reply is to be executed, and in a case where the destination is the proxy target node (Step S51: Y), goes to Step S52, and otherwise (Step S51: N), goes to Step S53. For example, in a case where the communication device 60 which is the proxy target node is the destination of the AODV Route Request packet, the control part 22 determines as Y to go to Step S52.

At Step S52, the control part 22 of the communication device 20 determines whether or not the proxy target node which is the transmission destination has already been registered in the ARP table, and when determining that the proxy target node has already been registered (Step S52: Y), goes to Step S57, and otherwise, goes to Step S54. For example, in the example in Fig 7, in a case where the communication device 60 which is the proxy target node has already been registered in the ARP table, the control part 22 determines as Y to go to Step S57, and otherwise, determines as N to go to Step S54.

At Step S53, the control part 22 of the communication device 20 transmits an AODV RREP packet toward the transmission source in a case where the destination is the own communication device. Incidentally, in a case where the destination is not the own communication device nor the proxy target node, the control part 22 broadcasts the AODV RREQ packet to other communication devices.

At Step S54, the control part 22 of the communication device 20 transmits an ARP Request packet to the proxy target node. For example, the communication device 20 transmits the ARP Request packet to the communication device 60 which is the proxy target node.

At Step S55, the control part 22 of the communication device 20 receives an ARP Reply packet from the proxy target node. For example, the communication device 20 receives the ARP Reply packet from the communication device 60 which is the proxy target node.

At Step S56, the control part 22 of the communication device 20 registers information regarding the proxy target node in the ARP table with reference to the ARP Reply packet received at Step S55. For example, the IP address and a MAC address of the communication device 60 which is the proxy target node are registered in the ARP table in correspondence with each other.

At Step S57, the control part 22 of the communication device 20 transmits an RREP packet toward the transmission source of the RREQ packet. Consequently, a route is established between the transmission-source and transmission-destination nodes. For example, the communication device 20 transmits an AODV Route Reply packet to the communication device 10 which is the transmission source of the AODV Route Request packet. As a result, the route based on the AODV protocol is established between the communication device 10 and the communication device 20.

At Step S58, the control part 22 of the communication device 20 mediates the communication between the transmission-source node and the transmission-destination node. For example, the communication device 20 which is the intermediate node receives a data packet transmitted from the communication device 10 which is the transmission-source node and executes the mediation processing of transferring the data packet to the communication device 60 which is the transmission-destination node.

Next, processing executed in the communication device 60 which is the transmission-destination node illustrated in Fig. 7 will be described with reference to Fig. 10. When the processing of the flowchart illustrated in Fig. 10 is started, the following steps are executed.

At Step S70, the control part 62, not illustrated, of the communication device 60 determines whether or not an ARP Request packet has been received, and when determining that it has been received (Step S70: Y), goes to Step S71, and otherwise (Step S70: N), ends the processing. For example, in a case where the ARP Request packet has been received from the communication device 20, the control part 62 determines as Y to go to Step S71.

At Step S71, the control part 62, not illustrated, of the communication device 60 transmits an ARP Reply packet to the transmission source of the ARP Request packet. For example, in a case where the communication device 20 is the transmission source of the ARP Request packet, the control part 62 transmits the ARP Reply packet to the communication device 20. As a result, the communication device 20 registers the information regarding the communication device 60 in the ARP table by the processes at Steps S55, S56.

At Step S72, the control part 62, not illustrated, of the communication device 60 receives a data packet transmitted from the transmission-source node via an AODV node. For example, the communication device 60 which is the transmission-destination node receives the data packet transmitted from the communication device 10 which is the transmission-source node, via the communication device 20 which is the AODV node.

According to the above-described processing, it is possible to achieve the operation previously described with reference to Fig. 8.

### (E) Explanation of Configuration of Third Embodiment of Present Invention

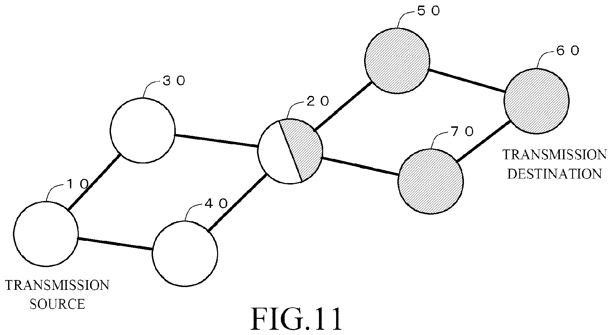

Fig. 11 is a diagram illustrating a configuration example of a network system according to a third embodiment of the present invention. As illustrated in Fig. 11, the network system according to the third embodiment of the present invention includes communication devices 10 to 70 functioning as nodes of a network. Note that the communication device 20 has the same configuration as that in Fig. 2, and the communication devices 10, 30 to 70 have the same configuration as that of the communication device 20.

In the example in Fig. 11, the communication devices 10, 30, 40 have AODV route construction capability and the communication devices 50 to 70 have DSR (Dynamic Source Routing) route construction capability. Further, the communication device 20 located at a node position connecting the two sub-networks has both of the AODV and DSR route construction capabilities. That is, the communication devices 10, 30, 40 and the communication devices 50 to 60 belong to independent sub-networks respectively, and the communication device 20 has a function of connecting the two independent sub-networks. In the example in Fig. 11, the sub-network by the communication devices 10, 30, 40 and the sub-network by the communication devices 50 to 60 both perform route construction based on an on-demand protocol.

### (F) Explanation of Operation of Third Embodiment of Present Invention

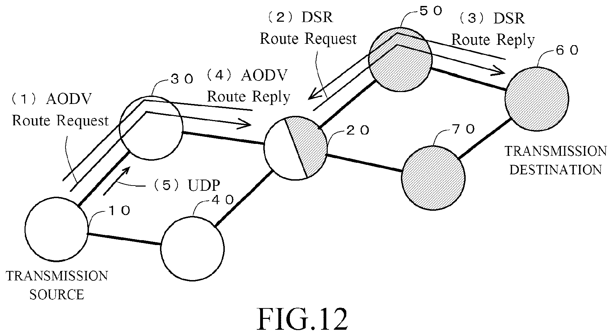

Next, the operation of the third embodiment illustrated in Fig. 11 will be described with reference to Fig. 12. The following describes, as an example, a case where the communication device 10 operates as a transmission-source node, the communication device 60 as a transmission-destination node, and the communication device 20 as an intermediate node. Further, the following briefly describes the operation of a conventional example and then describes the operation of the third embodiment.

In the conventional example, in a case where a data packet is transmitted from the transmission-source communication device 10 to the transmission-destination communication device 60, the communication device 10 broadcasts an AODV Route Request packet addressed to an IP address of the communication device 60. When receiving such an AODV Route Request packet, the communication device 20 executes a proxy reply since the IP address is not its own address but is that of the communication device 60 connected to the DSR-based network. Specifically, the communication device 20 transmits an AODV Route Reply packet to the transmission-source communication device 10. As a result, the communication device 10 receiving the AODV Route Reply packet starts the transmission of the data packet toward the communication device 20. Thereafter, the communication device 20 executes processing of establishing a route to the communication device 60 based on DSR. The communication device 20 succeeding in the establishment of the route to the communication device 60 based on DSR transmits the data packet which is stored in a buffer after received from the communication device 10, to the communication device 60. Therefore, in the conventional example, since the data packet is transmitted from the communication device 10 before the route based on DSR is established between the communication device 20 and the communication device 60, the communication device 20 has to assume the worst case when preparing the capacity of the buffer.

Next, the operation of the third embodiment will be described with reference to Fig. 12. In the third embodiment, when the transmission-source communication device 10 broadcasts an AODV Route Request packet to the transmission-destination communication device 60, this packet transferred through the route illustrated in Fig. 12 is received by the communication device 20 (1). Since the IP address is not its own address but is the address of the subordinate communication device 60, the communication device 20 first determines whether or not the communication device 60 has been registered in a route table, and in a case where it has not been registered, transmits a DSR Route Request packet to the communication device 60 (2). Then, when receiving a DSR Route Reply packet from the communication device 60 (3), the communication device 20 registers the communication device 60 in the route table and thereafter transmits an AODV Route Reply packet to the transmission-source communication device 10 (4). On the other hand, in a case where the communication device 60 has been registered in the route table, the communication device 20 determines that a route has already been established and transmits an AODV Route Reply packet to the transmission-source communication device 10 without transmitting the DSR Route Request packet.

When the communication device 10 receives the AODV Route Reply packet, a route based on AODV is established between the communication device 10 and the communication device 20, and accordingly the communication device 10 starts the transmission of a data packet to the communication device 20 based on UDP (5).

According to the above-described operation, the communication device 20 being the intermediate node which replies as a proxy transmits the AODV Route Reply packet after establishing the route based on DSR between itself and the communication device 60, which can prevent the data packet from being transmitted before the route to the communication device 60 is established. This can reduce a buffer capacity that the communication device 20 needs to have.

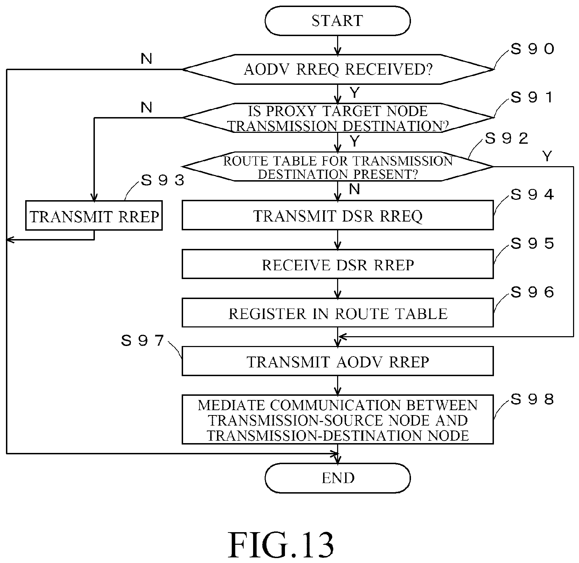

Next, processing executed in the third embodiment will be described with reference to Fig. 13. Fig. 13 is an explanatory flowchart of an example of processing executed in the communication device 20 illustrated in Fig. 11. When the processing of this flowchart is started, the following steps are executed.

At Step S90, the control part 22 of the communication device 20 determines whether or not an AODV RREQ (Route Request) packet has been received, and when determining that it has been received (Step S90: Y), goes to Step S91, and otherwise (Step S90: N), ends the processing. For example, in a case where the AODV Route Request packet has been received from the communication device 10, the control part 22 goes to Step S91.

At Step S91, the control part 22 of the communication device 20 determines whether or not a transmission destination of the AODV RREQ packet received at Step S90 is a proxy target node, and in a case where the transmission destination is the proxy target node (Step S91: Y), goes to Step S92, and otherwise (Step S59: N), goes to Step S93. For example, in a case where the communication device 60 which is the proxy target node is the destination of the AODV Route Request packet, the control part 22 determines as Y to go to Step S92.

At Step S92, the control part 22 of the communication device 20 determines whether or not the proxy target node which is the transmission destination has been registered in the route table, and when determining that it has been registered (Step S92: Y), goes to Step S97, and otherwise, goes to Step S94. For example, in the example in Fig 11, in a case where the communication device 60 which is the proxy target node has been registered in the route table, the control part 22 determines as Y to go to Step S96, and otherwise, determines as N to go to Step S94.

At Step S93, the control part 22 of the communication device 20 transmits an AODV RREP packet toward the transmission source in a case where the destination is the own address. Incidentally, in a case where the destination is not the own communication device nor the proxy target node, the control part 22 transfers the AODV RREQ packet to another communication device.

At Step S94, the control part 22 of the communication device 20 transmits a DSR RREQ (Route Request) packet to the proxy target node to execute route construction. For example, the communication device 20 transmits the DSR Route Request packet to the communication device 60 which is the proxy target node.

At Step S95, the control part 22 of the communication device 20 receives a DSR RREP (Route Reply) packet from the proxy target node. For example, the communication device 20 receives the DSR Route Reply packet from the communication device 60 which is the proxy target node.

At Step S96, the control part 22 of the communication device 20 registers information regarding the proxy target node in the route table with reference to the DSR RREP packet received at Step S95. For example, the communication device 20 registers the IP address and MAC of the communication device 60 which is the proxy target node in the route table in correspondence with each other. As a result, the route based on the DSR protocol is established between the communication device 20 and the communication device 60.

At Step S97, the control part 22 of the communication device 20 transmits an AODV RREP packet toward the transmission source of the RREQ packet. Consequently, the route is established between the transmission-source and transmission-destination nodes. For example, the communication device 20 transmits the AODV Route Reply packet to the communication device 10 which is the transmission source of the AODV Route Request packet. As a result, the route based on the AODV protocol is established between the communication device 10 and the communication device 20.

At Step S98, the control part 22 of the communication device 20 mediates the communication between the transmission-source node and the transmission-destination node. For example, the communication device 20 which is the intermediate node receives a data packet transmitted from the communication device 10 which is the transmission-source node and executes the mediation processing of transferring the data packet to the communication device 60 which is the transmission-destination node.

According to the above-described processing, it is possible to achieve the operation previously described with reference to Fig. 12.

### (G) Explanation of Modification Embodiment

The above embodiments are only examples and it goes without saying that the present invention is not limited to the above-described cases. For example, in the description of the above first to third embodiments, the case where the communication devices 10 to 70 are wire-connected is taken as an example, but they may be configured to be wirelessly connected. In this case, in the configuration illustrated in Fig. 2, the receiving parts 24-1 to 24-n and the transmitting parts 25-1 to 25-n are replaced by radio transmitting and receiving parts.

Further, in the above first to third embodiments, some communication devices are illustrated for the simplification of the drawings, but actually, communication devices other than those illustrated may be present.

Further, in the second embodiment, in the flowchart illustrated in Fig. 9, only in the case where the proxy target node has not been registered in the ARP table, the ARP Request is transmitted to the proxy target node, but the ARP Request may be transmitted also in the case where the proxy target node has been registered. Such a configuration makes it possible to cope with a case where the registered contents are not correct even though the proxy target node has been registered. Similarly, in the third embodiment as well, the DSR route construction processing may be executed even in the case where the transmission destination has been registered in the route table. Such a configuration makes it possible to cope with a case where the registered contents are not correct even though the transmission destination has been registered.

Further, in the third embodiment illustrated in Fig. 12, AODV and DSR are combined, but the present invention may be applied to a network with other combination.

Further, a sub-network to which the present invention is applicable is not limited to the L (Layer)3 network. For example, an L2 network can be used as the sub-network. That is, the present invention is applicable not only to a case where the L3 networks are combined as sub-networks but also to a case where the L3 network and the L2 network are combined as sub-networks.

### Explanation of Reference Signs

- 10 to 70: communication device
- 21: packet relay processing part
- 22: control part
- 23: storage part
- 23a: route information
- 24-1 to 24-n: receiving part
- 25-1 to 25-n: transmitting part

## Claims

1. A network system which includes at least a communication device as a transmission source, a communication device as a transmission destination, and an intermediate communication device disposed between the transmission-source communication device and the transmission-destination communication device, the intermediate communication device having a function of connecting sub-networks which construct communication routes based on route construction protocols independent of each other,
wherein the intermediate communication device comprises:
a route establishing means that establishes a route to the transmission-destination communication device when a packet addressed to the transmission-destination communication device is received from the transmission-source communication device; and
a proxy reply means that replies as a proxy for the transmission-destination communication device to the transmission-source communication device when the route is established by the route establishing means.

2. The network system according to claim 1, wherein:
at least part between the intermediate communication device and the transmission-destination communication device has a route construction function based on an on-demand protocol and the transmission-source communication device has a route construction function based on a protocol independent of the protocol used by the intermediate communication device;
the route establishing means of the intermediate communication device establishes the route to the transmission-destination communication device based on the on-demand protocol when the intermediate communication device receives the packet addressed to the transmission-destination communication device from the transmission-source communication device; and
the proxy reply means replies as a proxy for the transmission-destination communication device to the transmission-source communication device when the route is established by the route establishing means.

3. The network system according to claim 1, wherein:
at least part between the transmission-source and intermediate communication devices has a route construction function based on an on-demand protocol and the transmission-destination communication device has a route construction function based on a protocol independent of the protocol used by the intermediate communication device;
the route establishing means of the intermediate communication device establishes the route to the transmission-destination communication device when the packet addressed to the transmission-destination communication device is received from the transmission-source communication device; and
the proxy reply means replies as a proxy for the transmission-destination communication device to the transmission-source communication device based on the on-demand protocol when the route is established by the route establishing means.

4. The network system according to claim 2 or 3, wherein the on-demand protocol is AODV.

5. The network system according to claim 1, wherein:
the transmission-source and transmission-destination communication devices belong to different sub-networks and the intermediate communication device is a communication device located at a node connecting the different sub-networks;
the route establishing means of the intermediate communication device establishes the route to the transmission-destination communication device when the intermediate communication device receives the packet addressed to the transmission-destination communication device from the transmission-source communication device; and
the proxy reply means replies as a proxy for the transmission-destination communication device to the transmission-source communication device when the route is established by the route establishing means.

6. The network system according to claim 3 or 5, wherein the route establishing means does not execute the operation of establishing the route to the transmission destination when a route table for the transmission destination is present.

7. A communication device used in a network system which includes at least a communication device as a transmission source, a communication device as a transmission destination, and an intermediate communication device, the intermediate communication device having a function of connecting sub-networks which construct communication routes based on route construction protocols independent of each other,
wherein the intermediate communication device comprises:
a route establishing means that establishes a route to the transmission-destination communication device when a packet addressed to the transmission-destination communication device is received from the transmission-source communication device; and
a proxy reply means that replies as a proxy for the transmission-destination communication device to the transmission-source communication device when the route is established by the route establishing means.

8. A communication method of a network system which includes at least a communication device as a transmission source, a communication device as a transmission destination, and an intermediate communication device, the intermediate communication device having a function of connecting sub-networks which construct communication routes based on route construction protocols independent of each other, the method comprising:
a route establishing step of establishing a route to the transmission-destination communication device when the intermediate communication device receives a packet addressed to the transmission-destination communication device from the transmission-source communication device; and
a proxy reply step of causing the intermediate communication device to reply as a proxy for the transmission-destination communication device to the transmission-source communication device when the route is established by the route establishing step.

## Amended claims

### Amended claims under Art. 19.1 PCT

1. A network system which includes at least a communication device as a transmission source, a communication device as a transmission destination, and an intermediate communication device disposed between the transmission-source communication device and the transmission-destination communication device, the intermediate communication device having a function of connecting sub-networks which construct communication routes based on route construction protocols independent of each other,
wherein the intermediate communication device comprises:
a route establishing means that establishes a route to the transmission-destination communication device when a packet addressed to the transmission-destination communication device is received from the transmission-source communication device; and
a proxy reply means that replies as a proxy for the transmission-destination communication device to the transmission-source communication device when the route is established by the route establishing means.

2. (added) The network system according to claim 1, wherein the proxy reply means withholds the proxy reply until the route is established by the route establishing means.

3. (after amendment) The network system according to claim 2, wherein:
at least part between the intermediate communication device and the transmission-destination communication device has a route construction function based on an on-demand protocol and the transmission-source communication device has a route construction function based on a protocol independent of the protocol used by the intermediate communication device;
the route establishing means of the intermediate communication device establishes the route to the transmission-destination communication device based on the on-demand protocol when the intermediate communication device receives the packet addressed to the transmission-destination communication device from the transmission-source communication device; and
the proxy reply means replies as a proxy for the transmission-destination communication device to the transmission-source communication device when the route is established by the route establishing means.

4. (after amendment) The network system according to claim 2, wherein:
at least part between the transmission-source and intermediate communication devices has a route construction function based on an on-demand protocol and the transmission-destination communication device has a route construction function based on a protocol independent of the protocol used by the intermediate communication device;
the route establishing means of the intermediate communication device establishes the route to the transmission-destination communication device when the packet addressed to the transmission-destination communication device is received from the transmission-source communication device; and
the proxy reply means replies as a proxy for the transmission-destination communication device to the transmission-source communication device based on the on-demand protocol when the route is established by the route establishing means.

5. (after amendment) The network system according to claim 3 or 4, wherein the on-demand protocol is AODV.

6. (after amendment) The network system according to claim 2, wherein:
the transmission-source and transmission-destination communication devices belong to different sub-networks and the intermediate communication device is a communication device located at a node connecting the different sub-networks;
the route establishing means of the intermediate communication device establishes the route to the transmission-destination communication device when the intermediate communication device receives the packet addressed to the transmission-destination communication device from the transmission-source communication device; and
the proxy reply means replies as a proxy for the transmission-destination communication device to the transmission-source communication device when the route is established by the route establishing means.

7. (after amendment) The network system according to claim 4 or 6, wherein the route establishing means does not execute the operation of establishing the route to the transmission destination when a route table for the transmission destination is present.

8. (after amendment) A communication device used in a network system which includes at least a communication device as a transmission source, a communication device as a transmission destination, and an intermediate communication device, the intermediate communication device having a function of connecting sub-networks which construct communication routes based on route construction protocols independent of each other,
wherein the intermediate communication device comprises:
a route establishing means that establishes a route to the transmission-destination communication device when a packet addressed to the transmission-destination communication device is received from the transmission-source communication device; and
a proxy reply means that replies as a proxy for the transmission-destination communication device to the transmission-source communication device when the route is established by the route establishing means.

9. (after amendment) A communication method of a network system which includes at least a communication device as a transmission source, a communication device as a transmission destination, and an intermediate communication device, the intermediate communication device having a function of connecting sub-networks which construct communication routes based on route construction protocols independent of each other, the method comprising:
a route establishing step of establishing a route to the transmission-destination communication device when the intermediate communication device receives a packet addressed to the transmission-destination communication device from the transmission-source communication device; and
a proxy reply step of causing the intermediate communication device to reply as a proxy for the transmission-destination communication device to the transmission-source communication device when the route is established by the route establishing step.

Statement under Art. 19.1 PCT

**Content of the amendment**
   (1) Claim 2 is added.
   (2) In accordance with the addition of claim 2, the claim numbers of subsequent claims have been changed.
   (3) Along with the addition of claim 2, the dependency of claims 3 to 7 has been changed.
**Statements**
   Slide 10 of the cited reference 1 (Masashi Ito, Toshihiro Shikama and Akira Watanabe: "A proposal of a wireless mesh network "WAPL" and its simulation results") states that "WAP near A creates a routing table to B and sends proxy ARP to terminal side." However, the timing for creating the routing table and the timing for sending the proxy ARP are not specified. Explaining in detail, it is considered that A and B operate with a path establishment protocol independent of WAP. For this reason, when WAP near B establishes a route with B, and a proxy response is made before path establishment, A starts to transmit a data packet, so WAP near B needs to provide a capacity of the buffer assuming the worst case. Therefore, WAP near B also needs to generate a proxy response after establishing the route; however, such procedures are not disclosed in the cited reference 1. For this reason, even if the person skilled in the art appreciates the description, namely "WAP near A creates a routing table to B and flows proxy ARP to the terminal side", it is not possible to easily obtain the subject matter of claim 1. Since the subject matter of claims 8 and 9 relates to a method corresponding to the subject matter of claim 1, the skilled person cannot conceive the subject matter of claims 8 and 9 based on the cited reference 1.
   The subject matter of claim 2 specifies that "said proxy response means holds said proxy response until said route is established by said route establishing means." With such a configuration, since the proxy response is made after the route is established, one may obtain the technical effect that the capacity of the buffer to be prepared can be minimized.
